(19) Europäisches Patentamt
European Patent Office
Office européen des brevets

(11) EP 4 215 586 A1

(12) **EUROPEAN PATENT APPLICATION**
published in accordance with Art. 153(4) EPC

(43) Date of publication:
**26.07.2023 Bulletin 2023/30**

(21) Application number: **21869061.8**

(22) Date of filing: **05.08.2021**

(51) International Patent Classification (IPC):
***C08L 81/02*** (2006.01) ***C08K 3/105*** (2018.01)
***C08K 3/32*** (2006.01) ***C08K 3/38*** (2006.01)
***C08K 3/40*** (2006.01)

(52) Cooperative Patent Classification (CPC):
**C08K 3/105; C08K 3/32; C08K 3/38; C08K 3/40; C08L 81/02**

(86) International application number:
**PCT/JP2021/029054**

(87) International publication number:
**WO 2022/059374 (24.03.2022 Gazette 2022/12)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.09.2020 JP 2020154550**

(71) Applicant: **DIC Corporation**
**Tokyo 174-8520 (JP)**

(72) Inventors:
- **AOKI, Takamichi**
  **Ichihara-shi, Chiba 290-8585 (JP)**
- **KANDA, Tomomichi**
  **Ichihara-shi, Chiba 290-8585 (JP)**

(74) Representative: **Gerauer, Marc Philippé**
**Kraus & Weisert**
**Patentanwälte PartGmbB**
**Thomas-Wimmer-Ring 15**
**80539 München (DE)**

(54) **POLYARYLENE SULFIDE RESIN COMPOSITION, MOLDED ARTICLE, AND METHODS FOR PRODUCING SAID POLYARYLENE SULFIDE RESIN COMPOSITION AND MOLDED ARTICLE**

(57) A polyarylene sulfide (PAS) resin composition that contains a PAS resin and an antiviral agent, has superior antibacterial and antiviral properties, and maintains its intrinsic mechanical strength, weld strength in particular, an article molded from this resin composition, and methods for producing them are provided. More specifically, the PAS resin composition is one that contains the PAS resin and antivirus agent as its essential components, the molded article is one molded from it, and the production methods, for the PAS resin composition and the molded article, are one that includes a step of melt-kneading the PAS resin and antiviral agent in a temperature range of equal to or higher than the melting point of the PAS resin and one in which the PAS resin composition is melted and molded. The antiviral agent is metal ion-containing phosphate and/or borate glass.

EP 4 215 586 A1

## Description

Technical Field

The present invention relates to a polyarylene sulfide resin composition, an article molded from a polyarylene sulfide resin, and methods for producing them.

Background Art

Polyarylene sulfide resins (hereinafter "PAS resins"), typified by polyphenylene sulfide resins (hereinafter "PPS resins"), are superior in heat resistance, chemical resistance, etc., and are used extensively, for example in the applications of automotive components, electric and electronic components, and fluid piping components. With such an expansion of the fields in which they are used, PAS resins have been finding their use in environments relatively friendly to bacteria, such as hot and humid conditions.

In the related art, researchers have studied the production of a molded article by molding a resin material into which an antibacterial agent has been mixed in advance. For example, organic antibacterial agents, such as N-(fluorodichloromethylthio)-phthalimide, 2-(4-thiazolyl)-benzimidazole, 2,3,5,6-chitochloro-4-(methylsulfonyl)-pyridine, 10,10'-oxybisphenoxarsine, trimethoxysilyl-propyloctadecyl ammonium chloride, 2-n-octyl-4-isothiazolin-3-one, and zinc bis(2-pyridylthio-1-oxide), are commercially available and commonly used. Many of these known antibacterial agents, however, are disadvantageous in that they decompose, deteriorate, and lose their effect during the molding process due to high molding temperatures for PPS resins, from 300°C to 350°C.

As ways to eliminate such disadvantages, PPS resin compositions containing phosphate particles (see PTL 1) and PPS resin compositions containing a metal ion-containing calcium phosphate double salt (see PTL 2), both as an inorganic antibacterial agent, have been disclosed. It has also been disclosed that PPS resin compositions containing a PPS resin and metal ion-containing borosilicate glass have superior antibacterial and antifungal properties and maintain these properties for an extended period (see PTL 3).

In recent years, furthermore, there has been increasing interest in antiviral properties (ability to inactivate viruses or antiviral activity) as countermeasures against viral infections, from seasonal and novel flu to SARS (severe acute respiratory syndrome), MERS (Middle East respiratory syndrome), and coronavirus disease 2019 (COVID-19), besides antibacterial properties. A movement has emerged to develop a product having antiviral properties as a novel, high added value different from the existing antibacterial properties.

The antiviral properties of the known PAS resin compositions containing an inorganic antibacterial agent and articles molded from them, however, have not been fully investigated.

Citation List

Patent Literature

PTL 1: Japanese Unexamined Patent Application Publication No. 03-043457
PTL 2: Japanese Unexamined Patent Application Publication No. 11-172105
PTL 3: Japanese Unexamined Patent Application Publication No. 10-324804

Summary of Invention

Technical Problem

An object of the present invention, therefore, is to provide a PAS resin composition having antibacterial and antiviral properties and superior in mechanical strength, weld strength in particular, an article molded from this resin composition, and methods for producing them.

Solution to Problem

After extensive research to solve the above problem, the inventors found that a PAS resin article maintains its intrinsic mechanical strength, weld strength in particular, and has superior antibacterial and antiviral properties when it contains a particular amount of a particular antiviral agent, specified below. Based on these findings, the inventors have reached the completion of the present invention.

Specifically, the present invention relates to a PAS resin composition containing a PAS resin (A) and an antiviral agent (B) as essential components, wherein:
the antiviral agent (B) is metal ion-containing phosphate and/or borate glass.
The present invention also relates to an article molded from the above PAS resin composition.
The present invention also relates to a method for producing a PAS resin composition, the method including a step of blending a PAS resin (A) and an antiviral agent (B) as essential components and melt-kneading the resin (A) and the antiviral agent (B) in a temperature range of equal to or higher than the melting point of the PAS resin (A), wherein:
the antiviral agent (B) is metal ion-containing phosphate and/or borate glass.
The present invention, furthermore, relates to a method for producing a molded article, the method including a step of producing a PAS resin composition by the above production method and a step of melt-molding the resulting PAS resin composition.
The present invention also relates to the use of the above molded article as an antiviral element.

Advantageous Effects of Invention

According to the present invention, there are provided a PAS resin composition having antibacterial and antiviral properties and superior in mechanical strength, weld strength in particular, an article molded from this resin composition, and methods for producing them.

Description of Embodiments

A PAS resin composition according to the present invention is a method for producing a PAS resin composition, the method including a step of blending a PAS resin (A) and an antiviral agent (B) as essential components and melt-kneading the resin (A) and the antiviral agent (B) in the temperature range of equal to or higher than the melting point of the PAS resin (A), wherein:
the antiviral agent (B) is metal ion-containing phosphate and/or borate glass. A detailed description will now be provided.
The PAS resin composition according to the present invention contains a PAS resin (A) as an essential component. The PAS resin (A) is one having a resin structure formed by repeating units of structure(s) in which an aromatic ring and sulfur atom(s) are bound together. Specifically, the PAS resin (A) is a resin formed by repeating units of a structural moiety represented by general formula (1) below

[Chem. 1]

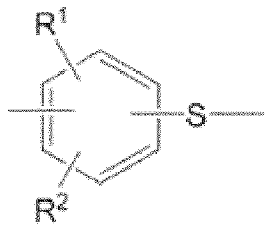

Formula (1)

(In the formula, $R^1$ and $R^2$ each independently represent a hydrogen atom, an alkyl group in which the number of carbon atoms is in the range of 1 to 4, a nitro group, an amino group, a phenyl group, a methoxy group, or an ethoxy group.) and optionally a trifunctional structural moiety represented by general formula (2) below.

[Chem. 2]

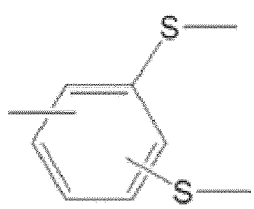

Formula (2)

Preferably, the percentage of the trifunctional structural moiety, represented by formula (2), is in the range of 0.001 to 3 mol%, in the range of 0.01 to 1 mol% in particular, of the total number of moles including the other structural moiety(ies).

For the structural moiety represented by general formula (1) above, it is preferred, for the mechanical strength of the PAS resin, that the $R^1$ and $R^2$ in the formula be hydrogen atoms. In that case, examples include the para-substituted one, represented by formula (3) below, and the meta-substituted one, represented by formula (4) below.

[Chem. 3]

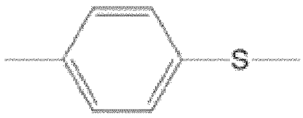

Formula (3)

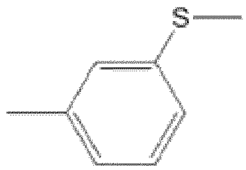

Formula (4)

Of these, the structure in which the aromatic ring in the repeating unit is para-substituted with the sulfur atom, represented by general formula (3) above, is particularly preferred in terms of the heat resistance and crystallinity of the PAS resin (A).

Besides the structural moieties represented by general formulae (1) and (2) above, the PAS resin (A) may contain the structural moieties represented by structural formulae (5) to (8) below

[Chem. 4]

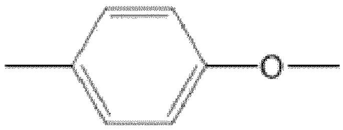

Formula (5)

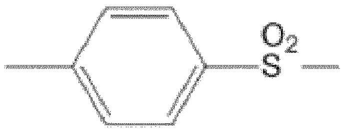

Formula (6)

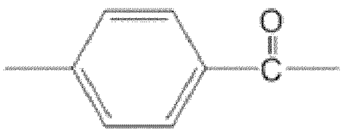

Formula (7)

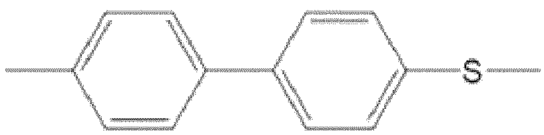

Formula (8)

up to 30 mol% of the total percentage including the structural moieties represented by general formulae (1) and (2) above. In the present invention, it is particularly preferred, for the heat resistance and mechanical strength of the PAS resin (A), that the percentage of the structural moieties represented by general formulae (5) to (8) above be 10 mol% or less. If the PAS resin (A) contains the structural moieties represented by general formulae (5) to (8) above, their form of binding may be either that of a random copolymer or that of a block copolymer.

The PAS resin (A), furthermore, may have naphthyl sulfide bonds, for example, in its molecular structure, but preferably, the percentage of the bonds is 3 mol% or less, 1 mol% or less in particular, of the total number of moles

including the other structural moiety(ies).

The characteristics of the PAS resin (A) are not critical unless the advantages of the present invention are impaired, but are as follows.

(Melt Viscosity)

The melt viscosity of the PAS resin (A) used in the present invention is not critical, but preferably, the melt viscosity measured at 300°C (V6) is in the range of 10 Pa s or higher, preferably in the range of 1000 Pa·s or lower, more preferably in the range of 500 Pa s or lower, even more preferably in the range of 300 Pa·s s or lower because this leads to a good balance between fluidity and mechanical strength. The measurement of the melt viscosity (V6) is performed using Shimadzu Corporation's CFT-500D flow tester, and the V6 is the melt viscosity of the PAS resin (A) measured after the resin is held at 300°C, load: $1.96\times10^6$ Pa, and L/D = 10 (mm)/1 (mm) for 6 minutes.

(Non-Newtonian Exponent)

The non-Newtonian exponent of the PAS resin (A) used in the present invention is not critical, but preferably is in the range of 0.90 to 2.00, both inclusive. If a linear PAS resin is used, it is preferred that its non-Newtonian exponent be in the range of 0.90 or higher, more preferably in the range of 0.95 or higher, preferably in the range of 1.50 or lower, more preferably in the range of 1.20 or lower. Such a PAS resin (A) is superior in mechanical characteristics, fluidity, and wear resistance. In the present invention, the non-Newtonian exponent (N) is a value calculated by measuring the shear rate (SR) and shear stress (SS) using Capilograph under the conditions of the melting point + 20°C and the orifice length (L) to orifice diameter (D) ratio LID = 40 and using the equation below. The closer the non-Newtonian exponent (N) is to 1, the closer to the structure is to linearity, and the higher the non-Newtonian exponent (N) is, the more branched the structure is.

[Math. 1]

$$SR = K \cdot SS^N$$

[where SR represents shear rate ($sec^{-1}$), SS represents shear stress ($dyne/cm^2$), and K represents a constant.]

(Production Method)

The method for producing the PAS resin (A) is not particularly limited. However, examples thereof include (production method 1) a method of polymerizing a dihalogeno aromatic compound, as necessary, with the addition of a polyhalogeno aromatic compound or other copolymerization components, in the presence of sulfur and sodium carbonate; (production method 2) a method of polymerizing a dihalogeno aromatic compound, as necessary, with the addition of a polyhalogeno aromatic compound or other copolymerization components, in the presence of a sulfidizing agent or the like in a polar solvent; and (production method 3) a method of self-condensing p-chlorothiophenol, as necessary, with the addition of other copolymerization components. Among these methods, the (production method 2) is widely used and preferable. During the reaction, an alkali metal salt of a carboxylic acid or a sulfonic acid, or an alkali hydroxide may be added to adjust a polymerization degree. In particular, a product obtained by any of the following methods of the (production method 2) above is preferable: a method for producing a polyarylene sulfide resin in which a hydrogenated sulfidizing agent is introduced into a mixture containing a heated organic polar solvent and a dihalogeno aromatic compound at a rate at which water can be removed from the reaction mixture so as to allow the dihalogeno aromatic compound to react with the sulfidizing agent in the organic polar solvent, as necessary, with the addition of a polyhalogeno aromatic compound, and the water content in the reaction system is controlled within a range of 0.02 mol to 0.5 mol with respect to 1 mole of the organic polar solvent (see JP-A-07-228699); and a method of reacting a dihalogeno aromatic compound with an alkali metal hydrosulfide and an organic acid alkali metal salt in the presence of a solid alkali metal sulfide and an aprotic polar organic solvent, as necessary, with the addition of a polyhalogeno aromatic compound or other copolymerization components while controlling the amount of the organic acid alkali metal salt to be in a range of 0.01 to 0.9 mol with respect to 1 mole of the sulfur source and controlling the water content in the reaction system to be 0.02 mol or less with respect to 1 mole of the aprotic polar organic solvent (see WO2010/058713 pamphlet). Specific examples of the dihalogeno aromatic compound include p-dihalobenzene, m-dihalobenzene, o-dihalobenzene, 2,5-dihalotoluene, 1,4-dihalonaphthalene, 1-methoxy-2,5-dihalobenzene, 4,4'-dihalobiphenyl, 3,5-dihalobenzoic acid, 2,4-dihalobenzoic acid, 2,5-dihalonitrobenzene, 2,4-dihalonitrobenzene, 2,4-dihaloanisole, p,p'-dihalodiphenyl ether, 4,4'-dihalobenzophenone, 4,4'-dihalodiphenylsulfone, 4,4'-dihalodiphenyl sulfoxide, 4,4'-dihalodiphenyl sulfide, and a compound having an alkyl group having 1 to 18 carbon atoms on the aromatic ring of each of the above compounds. Examples of the polyhalogeno aromatic compound include 1,2,3-trihalobenzene, 1,2,4-trihalobenzene, 1,3,5-trihalobenzene, 1,2,3,5-tetrahalobenzene, 1,2,4,5-tetrahalobenzene, and 1,4,6-trihalonaphthalene. In addition, the halogen atom contained in each of the above compounds is desirably a chlorine atom or a bromine atom.

The method for post-treating the reaction mixture containing the PAS resin (A) obtained by the polymerization process is not particularly limited. However, examples thereof include (post-treatment1) a method including: first distilling away the solvent from the reaction mixture under reduced pressure or ordinary pressure after addition or no addition of an acid or a base after the completion of the polymerization reaction, then rinsing the solids after the distillation of the solvent with a solvent such as water, a reaction solvent (or an organic solvent having a solubility comparable to that of a low-molecular polymer), acetone, methyl ethyl ketone, and alcohols one or more times, further neutralizing, water washing, filtering, and drying; (post-treatment 2) a method including:

precipitating solid products of polyarylene sulfide, mineral salt and the like by adding, as a precipitation agent, a solvent (which is soluble in the used polymerization solvent, and is a poor solvent with respect to at least the polyarylene sulfide) such as water, acetone, methyl ethyl ketone, alcohols, ethers, halogenated hydrocarbon, aromatic hydrocarbon, and

aliphatic hydrocarbon to the reaction mixture after the completion of the polymerization reaction, filtering, rinsing, and drying; (post-treatment 3) a method including: adding a reaction solvent (or an organic solvent having a solubility comparable to that of a low-molecular polymer) to the reaction mixture after the completion of the polymerization reaction, followed by stirring, filtering to remove the low-molecular-weight polymer, then performing rinsing with a solvent such as water, acetone, methyl ethyl ketone, and

alcohols one or more times, then neutralizing, water washing, filtering, and drying; (post-treatment 4) a method including: water washing by adding water to the reaction mixture after the completion of the polymerization reaction, filtering, performing an acid treatment by adding an acid during the water washing as necessary, and drying; and (5) a method including: filtering the reaction mixture after the completion of the polymerization reaction, performing rinsing with a reaction solvent one or more times as necessary,

further water washing, filtering, and drying.

In the post-treatment methods exemplified in (post-treatment 1) to (post-treatment 5) above, the PAS resin (A) may be dried in vacuum, air, or an inert gas atmosphere such as nitrogen.

The PAS resin composition according to the present invention contains an antiviral agent (B) as an essential component. The antiviral agent (B) is an antiviral agent containing metal ions supported by phosphate and/or borate glass, i.e., metal ion-containing phosphate and/or borate glass.

The metal ions contained in the antiviral agent (B) used in the present invention may be any of silver ions, zinc ions, or copper ions, but preferably, it is good to use silver ions. Preferably, the percentage of these metal ions in the glass is from 0.01% to 5% by mass.

Preferably, the antiviral agent (B) is one that contains 40 to 75 mol% $P_2O_5$ component as a glass component. Preferably, furthermore, the antiviral agent (B) is one that contains 1 to 10 mol% $B_2O_3$ component as a glass component. It is particularly preferred that the antiviral agent (B) be one that contains $P_2O_5$ and $B_2O_3$ components as glass components. An example of a particularly preferred one is $B_2O_3$-$P_2O_5$ glass in which 0.1% to 5% by weight silver ions are contained as a $Ag_2O$ component in the glass.

The remainder may be at least one selected from the group consisting of a $Na_2O$ component, a $K_2O$ component, a $SiO_2$ component, a MgO component, a CaO component, a ZnO component, and an $Al_2O_3$ component. More specifically, the remainder may be, for example, ZnO and $Al_2O_3$ components or may be, for example, CaO, MgO, $Na_2O$, $K_2O$, $SiO_2$, and $Al_2O_3$ components.

Increasing the percentage of $Na_2O$ and $K_2O$ components in this remainder portion tends to encourage the dissolution of the metal ions into water, whereas increasing the percentage of $SiO_2$, MgO, CaO, ZnO, and $Al_2O_3$ components tends to discourage this dissolution. The manufacturer, therefore, can adjust the composition of the remainder portion as appropriate considering the degree of dissolution into water. For example, if the metal ions are silver ions, the composition of the remainder portion can be adjusted so that the cumulative dissolution of silver ions per unit time of immersion (1 h) will be in the range of 0.00001 to 0.001 (mg/g of glass).

It is not critical how the metal ion-containing phosphate and/or borate glass used in the present invention is produced. It can be, however, obtained by mixing the metal ions and a phosphate and/or a borate or their oxide(s) as essential components together, optionally with a salt of an alkali metal, such as sodium or potassium, a salt of an alkaline earth metal, such as magnesium or calcium, a silicate, a zinc salt, or their oxide, melting the mixture at 800°C to 1500°C, cooling the melt, and then milling the resulting vitreous substance and classifying the resulting particles.

As for the maximum particle diameter of the antiviral agent (B) used in the present invention, it is not critical

but preferably is 300 μm or less because in that case the particles are superior in mechanical strength, fluidity, and surface appearance. More preferably, the maximum particle diameter of the antiviral agent (B) is 200 μm or less, even more preferably 100 μm or less, in particular 50 μm or less. The maximum particle diameter in this context is the particle diameter at 98% (D98) in a cumulative particle diameter distribution curve measured according to the standard method using a laser diffraction/scattering particle size distribution analyzer (Microtrac MT3300EXII).

An example of such an antiviral agent (B) is "IONPURE P" (Ishizuka Glass Co., Ltd.).

Preferably, the amount of the antiviral agent (B) is in the range of 2 parts by mass or more, more preferably 3 parts by mass or more, even more preferably 4 parts by mass or more and preferably is in the range of 44 parts by mass or less, more preferably 40 parts by mass or less, even more preferably 30 parts by mass or less per 100 parts by mass of the PAS resin (A). When the amount of the antiviral agent (B) in these ranges, the PAS resin composition gives a molded article superior in effectiveness in limiting bacterial and viral growth and in formability and mechanical strength.

The PAS resin composition according to the present invention can contain a silane coupling agent as an optional component. A silane coupling agent used in the present invention can be of any kind unless it impairs the advantages of the present invention, but an example of a preferred one is a silane coupling agent having a functional group that reacts with a carboxy group, such as an epoxy, isocyanato, amino, or hydroxyl group. Examples of such silane coupling agents include epoxy-containing alkoxysilane compounds, such as γ-glycidoxypropyltrimethoxysilane, γ-glycidoxypropyltriethoxysilane, and β-(3,4-epoxycyclohexyl)ethyltrimethoxysilane, isocyanato-containing alkoxysilane compounds, such as γ-isocyanatopropyltrimethoxysilane, γ-isocyanatopropyltriethoxysilane, γ-isocyanatopropylmethyldimethoxysilane, γ-isocyanatopropylmethyldiethoxysilane, γ-isocyanatopropylethyldimethoxysilane, γ-isocyanatopropylethyldiethoxysilane, and γ-isocyanatopropyltrichlorosilane, amino-containing alkoxysilane compounds, such as γ-(2-aminoethyl)aminopropylmethyldimethoxysilane, γ-(2-aminoethyl)aminopropyltrimethoxysilane, and γ-aminopropyltrimethoxysilane, and hydroxyl-containing alkoxysilane compounds, such as γ-hydroxypropyltrimethoxysilane and γ-hydroxypropyltriethoxysilane. A silane coupling agent is not an essential component in the present invention, but if contained, its amount is not critical unless the advantages of the present invention are impaired; preferably, however, its amount is in the range of 0.01 parts by mass, more preferably 0.1 parts by mass, to preferably 10 parts by mass, more preferably 5 parts by mass, all inclusive, per 100 parts by mass of the PAS resin (A). In such a range, the PAS resin composition gives a molded article superior in formability and mechanical strength.

The PAS resin composition according to the present invention can contain thermoplastic elastomers as optional components. Examples of thermoplastic elastomers include polyolefin elastomers, fluoroelastomers, and silicone elastomers, and of these, polyolefin elastomers are examples of preferred ones. Preferably, the amount of these thermoplastic elastomers is in the range of 1 part by mass, more preferably 2 parts by mass, to preferably 20 parts by mass, more preferably 15 parts by mass, all inclusive, per 100 parts by mass of the PAS resin (A). In such a range, the PAS resin composition gives a molded article superior in formability and mechanical strength, impact resistance in particular.

To take the example of polyolefin elastomers, examples include homopolymers of α-olefins, copolymers of two or more α-olefins, and copolymers of one or two or more α-olefins and at least one polymerizable vinyl compound having a functional group. In this context, examples of α-olefins include α-olefins in which the number of carbon atoms is in the range of 2 to 8, both inclusive, such as ethylene, propylene, and 1-butene. Examples of functional groups include the carboxy, acid anhydride (-C(=O)OC(=O)-), epoxy, amino, hydroxyl, mercapto, isocyanate, and oxazoline groups. The polymerizable vinyl compound having a functional group, furthermore, can be one or two or more of compounds like vinyl acetate; α,β-unsaturated carboxylic acids, such as (meth)acrylic acid; alkyl esters of α,β-unsaturated carboxylic acids, such as methyl acrylate, ethyl acrylate, and butyl acrylate; metal salts of α,β-unsaturated carboxylic acids, such as ionomers (the metal can be, for example, an alkali metal, such as sodium, an alkaline earth metal, such as calcium, or zinc); glycidyl esters of α,β-unsaturated carboxylic acids, such as glycidyl methacrylate, and analogues; α,β-unsaturated dicarboxylic acids, such as maleic acid, fumaric acid, and itaconic acid; and derivatives of α,β-unsaturated dicarboxylic acids (monoesters, diesters, and acid anhydrides). One such thermoplastic elastomer may be used alone, or two or more may be used in combination.

The present invention can contain a fibrous filler as an optional component. Examples of such fiber fillers include glass fiber, carbon fiber, silane glass fiber, ceramic fiber, aramid fiber, and metal fiber, and one or two or more kinds can be contained.

If fibrous filler(s), although being optional component(s), is contained, it is preferred that its amount be in the range of 1 part by mass or more, more preferably 5 parts by mass or more, even more preferably 15 parts by mass or more and preferably be in the range of 300 parts by mass or less, more preferably 200 parts by mass or less, even more preferably 150 parts by mass or less per 100 parts by mass of the PAS resin (A). When the amount of fibrous filler(s) in these ranges, a greater advantage is derived in terms of the maintenance of the mechanical strength of a molded article.

The fibrous filling material(s) can be one(s) processed with at least one surface treatment agent or binder. This is preferred because it helps improve adhesion to the PAS resin (A). The surface treatment agent or binder can be, for example, a silane compound having a functional group such as an amino, epoxy, isocyanate, or vinyl group, a titanate compound, or at least one polymer selected from the group consisting of acrylic resins, urethane resins, epoxy resins, etc.

Optionally, the PAS resin composition according to the present invention can further contain, as optional components, extra fillers other than the antiviral agent (B), which is an essential component, and fibrous filler(s), which is optional component(s) (hereinafter also referred to as "extra fillers"). These extra fillers can even be known and commonly used materials unless they impair the advantages of the present invention, and examples include fillers in various shapes, such as particulate or plate-shaped ones. Non-fibrous fillers, such as glass beads, glass flakes, barium sulfate, clay, pyrophyllite, bentonite, sericite, mica, isinglass, talc, attapulgite, ferrite, calcium silicate, calcium carbonate, magnesium carbonate, glass beads, zeolite, milled fiber, and calcium sulfate, can also be used.

Extra fillers are not essential components in the present invention, but if the resin composition contains them, their amount is not critical unless the advantages of the present invention are impaired. For example, it is preferred that the amount of extra fillers be in the range of 1 part by mass, more preferably 10 parts by mass, to preferably 600 parts by mass, more preferably 200 parts by mass, all inclusive, per 100 parts by mass of the PAS resin (A). This is preferred because in such a range the resin composition exhibits good mechanical strength and formability.

Besides the above components, furthermore, the PAS resin composition according to the present invention can further contain synthetic resins such as polyester resins, polyamide resins, polyimide resins, polyetherimide resins, polycarbonate resins, polyphenylene ether resins, polysulfone resins, polyethersulfone resins, polyether ether ketone resins, polyether ketone resins, polyarylene resins, polyethylene resins, polypropylene resins, polyethylene tetrafluoride resins, polyethylene difluoride resins, polystyrene resins, ABS resins, phenolic resins, urethane resins, and liquid-crystalline polymers (hereinafter simply referred to as synthetic resins) as optional components as needed according to the purpose of use. Synthetic resins are not essential components in the present invention, but if contained, their percentage is not critical unless the advantages of the present invention are impaired and varies according to the purposes. Thus there is no absolute rule, but for example, the proportion of synthetic resins in the resin composition according to the present invention can be roughly in the range of 5 parts by mass or greater and in the range of 15 parts by mass or less per 100 parts by mass of the PAS resin (A). In other words, it is preferred that the proportion of the PAS resin (A) to the PAS resin (A) plus synthetic resins be in the range of (100/115) or greater, more preferably in the range of (100/105) or greater, on a mass basis.

The PAS resin composition according to the present invention, furthermore, may also contain known and commonly used additives, such as coloring agents, antistatic agents, antioxidants, heat stabilizers, ultraviolet stabilizers, ultraviolet absorbers, foaming agents, flame retardants, flame retardant aids, antirusts, and coupling agents, as optional components as needed. These additives are not essential components and can be used according to the intended purposes and applications in such a manner as not to impair the advantages of the present invention, with the amounts adjusted as appropriate, preferably in the range of 0.01 parts by mass or more, preferably in the range of 1000 parts by mass or less, per 100 parts by mass of the PAS resin (A) for example.

A method according to the present invention for producing a PAS resin composition is a method for producing a PAS resin composition, the method including a step of blending a PAS resin (A) and an antiviral agent (B) as essential components and melt-kneading the resin (A) and the antiviral agent (B) in the temperature range of equal to or higher than the melting point of the PAS resin (A), wherein:
the antiviral agent (B) is metal ion-containing phosphate and/or borate glass. A detailed description will now be provided.

The method according to the present invention for producing a PAS resin composition include a step of blending the essential components specified above and melt-kneading them in the temperature range of equal to or higher than the melting point of the PAS resin (A). To be more specific, a PAS resin composition according to the present invention contains essential components and other, optional components as needed. It is not critical how the resin composition used in the present invention is produced, but an example of a particularly preferred production method is to mix the essential components and any necessary optional components and melt and knead them or, to be more specific, to dry-mix the essential components to uniformity, for example using a tumbler or Henschel mixer, and then put the mixture into a twin-screw extruder and melt and knead it there.

The melt-kneading can be performed by heating the components to a temperature range in which the resin temperature will be equal to or higher than the melting point of the PAS resin (A), preferably a temperature range in which the resin temperature will be equal to or higher than that melting point + 10°C, more preferably to a temperature in the range of that melting point + 10°C, even more preferably that melting point + 20°C, to preferably that melting point + 100°C, more preferably that melting point + 50°C, all inclusive.

Preferably, the melt-kneading machine is a twin-screw kneader-extruder for dispersibility and productivity reasons. It is preferred to, for example, melt and knead the components while adjusting the range of rates of ejection of the resin component of 5 to 500 (kg/hr) and the range of screw rotation speeds of 50 to 500 (rpm) as needed, more preferably to melt and knead the components under conditions under which the ratio between them (rate of ejection/screw rotation speed) is in the range of 0.02 to 5 (kg/hr/rpm). The addition and mixing of the components into the melt-kneading machine, furthermore, may be simultaneous or may be divided. For example, the metal ion-containing phosphate and/or borate glass used in the present invention can be put into the twin-screw kneader-extruder through a side feeder of the extruder. Of the components described above, fibrous fillers, if added as needed, are put into the twin-screw kneader-extruder

preferably through a side feeder of the extruder for dispersibility reasons. Fillers containing a glass component are usually put into the extruder through its side feeder, but for the metal ion-containing phosphate and/or borate glass used in the present invention, it is preferred to dry-mix it with the other essential component and then put the mixture into the extruder through its top feeder because this improves dispersibility, and mechanical strength in consequence, and makes the resin composition better in antibacterial and antiviral properties at the same time. As for the position of the side feeder, it is preferred that the ratio of the distance from the twin-screw kneader-extruder's resin inlet (top feeder) to the side feeder to the whole length of the screws of the extruder (hereinafter also referred to as "the S/T ratio") be 0.1 or higher, more preferably 0.3 or higher. Preferably, such a ratio is 0.9 or lower, more preferably 0.7 or lower.

Obtained through melt-kneading in such a way, the PAS resin composition according to the present invention is a molten mixture containing the essential components specified above and optional components that are added as needed, and components derived from them. The PAS resin composition according to the present invention, therefore, has a morphology in which a PAS resin (A) forms a continuous phase with another essential component and optional components dispersed in it. Preferably, the PAS resin composition according to the present invention is subjected, after the melt-kneading, to preliminary drying in the temperature range of 100°C to 150°C by a known method, such as by shaping the molten resin composition into strands by extrusion, then processing the strands into pellet, chip, granular, powder, or other form, and then performing drying.

A molded article according to the present invention is obtained by melting and molding a PAS resin composition. A method according to the present invention for producing a molded article, furthermore, has a step of melt-molding a PAS resin composition as described above. The molded article according to the present invention, therefore, has a morphology in which a PAS resin (A) forms a continuous phase with another essential component, excluding the PAS resin (A), and optional components dispersed in it. By virtue of such a morphology of the PAS resin composition, a molded article superior in mechanical strength is obtained.

The PAS resin composition according to the present invention can be subjected to various types of shaping, such as injection molding, compression molding, composite, sheet, pipe, and other types of extrusion molding, pultrusion molding, blow molding, and transfer molding, but is particularly suitable for injection molding applications because it is superior in release from a mold, too. If the PAS resin composition is molded by injection molding, the molding conditions are not critical; the composition can usually be molded by an ordinary method. For example, the PAS resin composition may be injected from the resin outlet of an injection molding machine into the mold and molded there after a step of being melted inside the molding machine in a temperature range in which the resin temperature is equal to or higher than the melting point of the PAS resin (A), preferably a temperature range in which the resin temperature is equal to or higher than that melting point + 10°C, more preferably a temperature range in which the resin temperature is from the melting point + 10°C to the melting point + 100°C, even more preferably a temperature range in which the resin temperature is from the melting point + 20°C to the melting point + 50°C. During this, the mold temperature can also be set to a known temperature range, such as room temperature (23°C) to 300°C, preferably 120°C to 180°C.

Examples of products of an article molded from the PAS resin composition according to the present invention include piping for transporting fluids and piping accessories, such as pipes, lining tubes, cap nuts, pipe connectors, (elbows, headers, tees, reducers, joints, couplers, etc.), types of valves, flow meters, and gaskets (seals and packing). Accessories to internal combustion engines of automotive and other components, such as types of fuel-related/exhaust/intake piping, air-intake nozzle snorkels, intake manifolds, and fuel pumps, are also examples of products, and the molded article can also be applied to other different applications. The use of the molded article according to the present invention, furthermore, is not limited to the foregoing; ordinary resin molded articles such as the following are also possible applications of it. Examples include electric/electronic components, typically protective/supporting elements/multiple separate semiconductors or modules for box-shaped integrated modules of electric/electronic components, sensors, LED lamps, connectors, sockets, resistors, relay casings, switches, coil bobbins, capacitors, variable capacitor casings, optical pickups, oscillators, types of terminal boards, transformers, plugs, printed circuit boards, tuners, loudspeakers, microphones, headphones, small motors, magnetic head bases, power modules, terminal blocks, semiconductors, liquid crystals, FDD carriages, FDD chassis, motor brush holders, parabolic antennas, and computer components; home and office appliance components, typically VTR components, television components, irons, hairdryers, rice cooker components, microwave components, acoustic components, audio/visual components, for example of audio/laserdisc/compact disc/DVD/Blu-ray disc systems, lighting components, fridge components, air conditioner components, typewriter components, word processor components, and temperature sensors; machinery components, typically office computer components, telephone components, facsimile components, photocopier components, jigs for cleaning, motor components, printers, and typewriters: optical device or precision machinery components, typically microscopes, binoculars, cameras, and clocks; and automotive/vehicle components, such as alternator terminals, alternator connectors, brush holders, slip rings, IC regulators, potentiometer bases for light dimmers, relay blocks, inhibitor switches, carburetor bodies, carburetor spacers, exhaust gas sensors, coolant sensors, oil temperature sensors, brake-pad wear sensors, throttle position sensors, crankshaft position sensors, air-flow meters, brake-pad fatigue sensors, thermostat bases for air conditioners, warm-air flow control valves, brush holders for radiator motors, turbine vanes, wiper motor

components, distributors, starter switches, ignition coils and their bobbins, motor insulators, motor rotors, motor cores, starter relays, wire harnesses for transmission, window washer nozzles, air-conditioner panel switchboards, coils for fuel-related electromagnetic valves, connectors for fuses, horn terminals, insulator plates for electrical equipment components, stepper-motor rotors, lamp sockets, lamp reflectors, lamp housings, brake pistons, solenoid bobbins, engine-oil filters, and ignitor casings, and the molded article can also be applied to other different applications.

## Examples

The present invention will now be described using examples and comparative examples, but the present invention is not limited to these examples. In the following, "%" and "parts" are by mass unless stated otherwise.

### <Examples 1 to 8 and Comparative Examples 1 to 4>

The materials were formulated according to the composition, components, and amounts presented in Table 1. Then these formulated materials were put into The Japan Steel Works, Ltd.'s vented twin-screw extruder "TEX-30$\alpha$ (product name)" and melted and kneaded to give pellets of the resin composition at a rate of ejection of the resin component of 30 kg/hr, a screw rotation speed of 200 rpm, and a resin temperature of 320°C. The glass fiber was put into the extruder through its side feeder (S/T ratio, 0.5), and the other materials were mixed to uniformity in a tumbler beforehand and then put into the extruder through its top feeder. Types of test specimens were produced by drying the resulting pellets of the resin composition in a Geer oven at 140°C for 2 hours and then shaping the dried pellets by injection molding, and these test specimens were subjected to the tests described below.

### <Example 9>

The materials were formulated according to the composition, components, and amounts presented in Table 1. Then these formulated materials were put into The Japan Steel Works, Ltd.'s vented twin-screw extruder "TEX-30$\alpha$ (product name)" and melted and kneaded to give pellets of the resin composition at a rate of ejection of the resin component of 30 kg/hr, a screw rotation speed of 200 rpm, and a resin temperature of 320°C. The glass fiber and the antiviral agent were put into the extruder through its side feeder (S/T ratio, 0.5), and the other materials were mixed to uniformity in a tumbler beforehand and then put into the extruder through its top feeder. Types of test specimens were produced by drying the resulting pellets of the resin composition in a Geer oven at 140°C for 2 hours and then shaping the dried pellets by injection molding, and these test specimens were subjected to the following tests.

### <Antibacterial Activity Test> as per JIS Z 2801

The resulting pellets were fed to Sumitomo Heavy Industries' injection molding machine (SE-75D-HP) set to a cylinder temperature of 310°C and shaped by injection molding using a shaping mold conditioned to a mold temperature of 140°C, giving a 50 mm $\times$ 50 mm $\times$ 2 mm thick sheet-shaped article.

This sheet-shaped article was put into a sterilized Petri dish, and the top of this article was inoculated with 0.4 ml of a bacterial culture having a concentration of $4.4\times10^5$ cfu/ml. The inoculated article was covered with a polypropylene film cut to 40 mm $\times$ 40 mm, and then the dish was closed with a lid with the film gently pressed down so that the bacterial culture would spread throughout the film. After such dishes were stored at 35°C and a relative humidity of 90% or higher for 0 and 24 hours, the test inocula were washed off the test specimen with 10 ml of SCDLP medium, and the viable cell count was measured through an agar plate assay. The antibacterial activity was calculated according to the following equation: R = Ut-At (Ut, the logarithm of the viable cell count per unit area after the reaction on an untreated test specimen; At, the logarithm of the viable cell count per unit area after the reaction on the treated test specimen). An article with an R of smaller than 1.0 was graded "$\times$," an article with an R of 1.0 or greater and smaller than 2.0 was graded "$\Delta$," and an article with an R of 2.0 or greater was graded "o." The test inocula were *Staphylococcus aureus* (NBRC 12732) and *Escherichia coli* (NBRC 3972).

### <Antiviral Activity Test> as per ISO 21702

The resulting pellets were fed to Sumitomo Heavy Industries' injection molding machine (SE-75D-HP) set to a cylinder temperature of 310°C and shaped by injection molding using a shaping mold conditioned to a mold temperature of 140°C, giving a 50 mm $\times$ 50 mm $\times$ 2 mm thick sheet-shaped article.

This sheet-shaped article was put into a sterilized Petri dish, and the top of this article was inoculated with 0.4 ml of a test virus suspension having an infectivity titer of $4\times 10^7$ PFU/ml. The inoculated article was covered with a polypropylene film cut to 40 mm $\times$ 40 mm, and then the dish was closed with a lid with the film gently pressed down so

that the viral suspension would spread throughout the film. After such dishes were stored at 25°C for 24 hours, the virus was washed off the test specimen with 10 ml of SCDLP medium, and the infectious titer was measured through a plaque assay. The antiviral activity was calculated according to the following equation: Mv = lg(Vb)-lg(Vc) (lg(Vb), the logarithm of the infectivity titer after the reaction on an untreated test specimen; lg(Vc), the logarithm of the infectivity titer after the reaction on the treated test specimen). An article with an Mv of smaller than 1.0 was graded "×," an article with an Mv of 1.0 or greater and smaller than 2.0 was graded "Δ," and an article with an Mv of 2.0 or greater was graded "∘." The test was performed using influenza A virus (ATCCC CL-34).

<Tensile Strength>

The resulting pellets were fed to Sumitomo Heavy Industries' injection molding machine (SE-75D-HP) set to a cylinder temperature of 310°C and shaped by injection molding using a mold for shaping an ISO Type-A dumbbell conditioned to a mold temperature of 140°C, giving an ISO Type-A dumbbell. The dumbbell was produced by single-gate injection of the resin so that the test specimen would include no weld. The resulting dumbbell was subjected to the measurement of tensile strength by a measuring method according to ISO 527-1 and -2.

<Weld Tensile Strength>

The resulting pellets were fed to Sumitomo Heavy Industries' injection molding machine (SE-75D-HP) set to a cylinder temperature of 310°C and shaped by injection molding using a mold for shaping an ISO Type-A dumbbell conditioned to a mold temperature of 140°C, giving an ISO Type-A dumbbell. The dumbbell was produced by dual-gate injection of the resin so that the test specimen would include a weld in the middle of the article. The resulting dumbbell was subjected to the measurement of tensile strength by a measuring method according to ISO 527-1 and -2.

[Table 1]

| | Examples | | | Comparative Examples | | |
|---|---|---|---|---|---|---|
| | 1 | 2 | 3 | 1 | 2 | 3 |
| A-1 | | | | | | |
| A-2 | 100 | 100 | 100 | 100 | 100 | 100 |
| A-3 | | | | | | |
| a-4 | | | | | | |
| B-1 | 4 | 17 | 27 | 45 | 0 | 1 |
| B-2 | | | | | | |
| C-1 | | | | | | |
| D-1 | | | | | | |
| E-1 | 45 | 50 | 55 | 60 | 43 | 43 |
| Antibacterial activity (Staphylococcus aureus) | ○ | ○ | ○ | ○ | × | × |
| Antibacterial activity (Escherichia coli) | ○ | ○ | ○ | ○ | × | × |
| Antiviral activity | ○ | ○ | ○ | ○ | × | × |
| Tensile strength (MPa) | 164 | 164 | 169 | 147 | 164 | 164 |
| Weld tensile strength (MPa) | 70 | 59 | 55 | 32 | 65 | 65 |

[Table 2]

| | Examples | | | | | | Comparative Example |
|---|---|---|---|---|---|---|---|
| | 4 | 5 | 6 | 7 | 8 | 9 | 4 |
| A-1 | | | | 100 | | | |

(continued)

| | Examples | | | | | | Comparative Example |
|---|---|---|---|---|---|---|---|
| | 4 | 5 | 6 | 7 | 8 | 9 | 4 |
| A-2 | 100 | 100 | | | 100 | 100 | |
| A-3 | | | 100 | | | | |
| a-4 | | | | | | | 100 |
| B-1 | 20 | 19 | 17 | 17 | | 17 | 8 |
| B-2 | | | | | 17 | | |
| C-1 | 20 | | | | | | |
| D-1 | | 11 | | | | | |
| E-1 | 60 | 56 | 50 | 50 | 50 | 50 | 46 |
| Antibacterial activity (Staphylococcus aureus) | ○ | ○ | ○ | ○ | ○ | ○ | ○ |
| Antibacterial activity (Escherichia coli) | ○ | ○ | ○ | ○ | ○ | ○ | ○ |
| Antiviral activity | ○ | ○ | ○ | ○ | Δ | Δ | ○ |
| Tensile strength (MPa) | 150 | 165 | 164 | 160 | 166 | 150 | 144 |
| Weld tensile strength (MPa) | 59 | 67 | 53 | 68 | 60 | 52 | 43 |

The proportions of the formulated components in Tables 1 and 2 represent parts by mass and are those of the following materials.

- PAS Resin Component

PPS Resins

A-1: Melt viscosity, 175 Pa s; non-Newtonian exponent, 1.02
A-2: Melt viscosity, 100 Pa s; non-Newtonian exponent, 1.07
A-3: Melt viscosity, 15 Pa s; non-Newtonian exponent, 1.06
a-4: Melt viscosity, 6 Pa·s; non-Newtonian exponent, 1.10

(Production Example 1) Production of PPS Resin (A-1)

[Step 1]

A 150-liter autoclave having stirring blades and to which a pressure gauge, a thermometer, a condenser, a decanter, and a fractionating column had been connected was charged with 33.075 parts by mass (225 molar parts) of p-dichlorobenzene (Hereinafter abbreviated to "p-DCB."), 3.420 parts by mass (34.5 molar parts) of NMP, 27.300 parts by mass of a 47.23% by mass aqueous solution of NaSH (230 molar parts as NaSH), and 18.533 parts by mass of a 49.21% by mass aqueous solution of NaOH (228 molar parts as NaOH). The temperature was increased to 173°C over 5 hours in a nitrogen atmosphere with stirring to make 27.300 parts by mass of water distill off, and then the autoclave was closed tightly. The p-DCB that azeotropically distilled off during the dehydration was separated using the decanter and returned to the autoclave at appropriate times. Inside the autoclave after the end of dehydration was a dispersion of an anhydrous sodium sulfide composition in fine particle form in p-DCB. The amount of NMP in this composition was 0.079 parts by mass (0.8 molar parts), indicating 98 mol% (33.7 molar parts) of the introduced NMP was hydrolyzed into the sodium salt of the ring-opened derivative of NMP (4-(methylamino)butyric acid) (Hereinafter abbreviated to "SMAB."). The amount of SMAB inside the autoclave was 0.147 molar parts per mole of sulfur atoms present in the autoclave. Since the theoretical amount of water removed when all of the introduced NaSH and NaOH turns into anhydrous $Na_2S$ is 27.921 parts by mass, the result indicates that, of 0.878 parts by mass (48.8 molar parts) of leftover water in

the autoclave, 0.609 parts by mass (33.8 molar parts) was consumed in the hydrolysis of NMP and NaOH and, therefore, was not present as water inside the autoclave, whereas the rest, 0.269 parts by mass (14.9 molar parts), remained inside the autoclave in the form of water or water of crystallization. The amount of water inside the autoclave was 0.065 moles per mole of sulfur atoms present in the autoclave.

[Step 2]

After the end of the above dehydration step, the internal temperature was lowered to 160°C, 46.343 parts by mass (467.5 molar parts) of NMP was added, and the temperature was increased to 185°C. The amount of water inside the autoclave was 0.025 moles per mole of NMP added in step 2. When the gauge pressure reached 0.00 MPa, the valve with the fractionating column connected to it was released, and the temperature was increased to an internal temperature of 200°C over 1 hour. During this, the temperature at the outlet of the fractionating column was controlled by cooling and valve adjustment to remain 110°C or below. The steam mixture of p-DCB and water that distilled off was condensed through the condenser and separated using the decanter, and p-DCB was returned to the autoclave. The amount of water that distilled off was 0.228 parts by mass (12.7 molar parts).

[Step 3]

The amount of water inside the autoclave at the start of step 3 was 0.041 parts by mass (2.3 molar parts), and this corresponded to 0.005 moles per mole of NMP added in step 2 and 0.010 moles per mole of sulfur atoms present in the autoclave. The amount of SMAB inside the autoclave was the same as in step 1, 0.147 moles per mole of sulfur atoms present in the autoclave. Then the temperature was increased from an internal temperature of 200°C to 230°C over 3 hours, and the contents were stirred for 1 hour at 230°C. Then the temperature was increased to 250°C, and the contents were stirred for 1 hour. The gauge pressure at an internal temperature of 200°C was 0.03 MPa, and the final gauge pressure was 0.40 MPa. After cooling, 0.650 parts by mass of the resulting slurry was poured into 3 parts by mass (3 parts by liter) of water, and the resulting mixture was stirred at 80°C for 1 hour and then filtered. This cake was washed by stirring in 3 parts by mass (3 parts by liter) of warm water for 1 hour again, and then the mixture was filtered. This operation was repeated four times. This cake was combined with 3 parts by mass (3 parts by liter) of water again, and the pH was adjusted to 4.0 by adding acetic acid. After washing by 1 hour of stirring, the mixture was filtered. This cake was washed by stirring in 3 parts by mass (3 parts by liter) of warm water for 1 hour again, and then the mixture was filtered. This operation was repeated twice. The residue was dried at 120°C overnight using a hot-air oven, giving PPS resin (A-1), a PPS resin in white powder form. The melt viscosity of this polymer at 300°C was 175 Pa s. The non-Newtonian exponent of the polymer was 1.02.

(Production Example 2) Production of PPS Resin (A-2)

[Step 1]

A 150-liter autoclave having stirring blades and to which a pressure gauge, a thermometer, a condenser, a decanter, and a fractionating column had been connected was charged with 33.222 parts by mass (226 molar parts) of p-dichlorobenzene (Hereinafter abbreviated to "p-DCB."), 3.420 parts by mass (34.5 molar parts) of NMP, 27.300 parts by mass of a 47.23% by mass aqueous solution of NaSH (230 molar parts as NaSH), and 18.533 parts by mass of a 49.21% by mass aqueous solution of NaOH (228 molar parts as NaOH). The temperature was increased to 173°C over 5 hours in a nitrogen atmosphere with stirring to make 27.300 parts by mass of water distill off, and then the autoclave was closed tightly. The p-DCB that azeotropically distilled off during the dehydration was separated using the decanter and returned to the autoclave at appropriate times. Inside the autoclave after the end of dehydration was a dispersion of an anhydrous sodium sulfide composition in fine particle form in p-DCB. The amount of NMP in this composition was 0.079 parts by mass (0.8 molar parts), indicating 98 mol% (33.7 molar parts) of the introduced NMP was hydrolyzed into the sodium salt of the ring-opened derivative of NMP (4-(methylamino)butyric acid) (Hereinafter abbreviated to "SMAB."). The amount of SMAB inside the autoclave was 0.147 molar parts per mole of sulfur atoms present in the autoclave. Since the theoretical amount of water removed when all of the introduced NaSH and NaOH turns into anhydrous $Na_2S$ is 27.921 parts by mass, the result indicates that, of 0.878 parts by mass (48.8 molar parts) of leftover water in the autoclave, 0.609 parts by mass (33.8 molar parts) was consumed in the hydrolysis of NMP and NaOH and, therefore, was not present as water inside the autoclave, whereas the rest, 0.269 parts by mass (14.9 molar parts), remained inside the autoclave in the form of water or water of crystallization. The amount of water inside the autoclave was 0.065 moles per mole of sulfur atoms present in the autoclave.

[Step 2]

After the end of the above dehydration step, the internal temperature was lowered to 160°C, 46.343 parts by mass (467.5 molar parts) of NMP was added, and the temperature was increased to 185°C. The amount of water inside the autoclave was 0.025 moles per mole of NMP added in step 2. When the gauge pressure reached 0.00 MPa, the valve with the fractionating column connected to it was released, and the temperature was increased to an internal temperature of 200°C over 1 hour. During this, the temperature at the outlet of the fractionating column was controlled by cooling and valve adjustment to remain 110°C or below. The steam mixture of p-DCB and water that distilled off was condensed through the condenser and separated using the decanter, and p-DCB was returned to the autoclave. The amount of water that distilled off was 0.228 parts by mass (12.7 molar parts).

[Step 3]

The amount of water inside the autoclave at the start of step 3 was 0.041 parts by mass (2.3 molar parts), and this corresponded to 0.005 moles per mole of NMP added in step 2 and 0.010 moles per mole of sulfur atoms present in the autoclave. The amount of SMAB inside the autoclave was the same as in step 1, 0.147 moles per mole of sulfur atoms present in the autoclave. Then the temperature was increased from an internal temperature of 200°C to 230°C over 3 hours, and the contents were stirred for 3 hours at 230°C. Then the temperature was increased to 250°C, and the contents were stirred for 1 hour. The gauge pressure at an internal temperature of 200°C was 0.03 MPa, and the final gauge pressure was 0.40 MPa. After cooling, 0.650 parts by mass of the resulting slurry was poured into 3 parts by mass (3 parts by liter) of water, and the resulting mixture was stirred at 80°C for 1 hour and then filtered. This cake was washed by stirring in 3 parts by mass (3 parts by liter) of warm water for 1 hour again, and then the mixture was filtered. This operation was repeated four times. This cake was combined with 3 parts by mass (3 parts by liter) of water again, and the pH was adjusted to 4.0 by adding acetic acid. After washing by 1 hour of stirring, the mixture was filtered. This cake was washed by stirring in 3 parts by mass (3 parts by liter) of warm water for 1 hour again, and then the mixture was filtered. This operation was repeated twice. The residue was dried at 120°C overnight using a hot-air oven, giving PPS resin (A-2), a PPS resin in white powder form. The melt viscosity of this polymer at 300°C was 100 Pa·s. The non-Newtonian exponent of the polymer was 1.02.

(Production Example 3) Production of PPS Resin (A-3)

[Step 1]

A 150-liter autoclave having stirring blades and to which a pressure gauge, a thermometer, a condenser, a decanter, and a fractionating column had been connected was charged with 35.868 parts by mass (244 molar parts) of p-dichlorobenzene, 3.420 parts by mass (34.5 molar parts) of NMP, 27.300 parts by mass of a 47.23% by mass aqueous solution of NaSH (230 molar parts as NaSH), and 18.533 parts by mass of a 49.21% by mass aqueous solution of NaOH (228 molar parts as NaOH). The temperature was increased to 173°C over 5 hours in a nitrogen atmosphere with stirring to make 27.300 parts by mass of water distill off, and then the autoclave was closed tightly. The p-DCB that azeotropically distilled off during the dehydration was separated using the decanter and returned to the autoclave at appropriate times. Inside the autoclave after the end of dehydration was a dispersion of an anhydrous sodium sulfide composition in fine particle form in p-DCB. The amount of NMP in this composition was 0.079 parts by mass (0.8 molar parts), indicating 98 mol% (33.7 molar parts) of the introduced NMP was hydrolyzed into the sodium salt of the ring-opened derivative of NMP (4-(methylamino)butyric acid) (Hereinafter abbreviated to "SMAB."). The amount of SMAB inside the autoclave was 0.147 molar parts per mole of sulfur atoms present in the autoclave. Since the theoretical amount of water removed when all of the introduced NaSH and NaOH turns into anhydrous $Na_2S$ is 27.921 parts by mass, the result indicates that, of 0.878 parts by mass (48.8 molar parts) of leftover water in the autoclave, 0.609 parts by mass (33.8 molar parts) was consumed in the hydrolysis of NMP and NaOH and, therefore, was not present as water inside the autoclave, whereas the rest, 0.269 parts by mass (14.9 molar parts), remained inside the autoclave in the form of water or water of crystallization. The amount of water inside the autoclave was 0.065 moles per mole of sulfur atoms present in the autoclave.

[Step 2]

After the end of the above dehydration step, the internal temperature was lowered to 160°C, 46.343 parts by mass (467.5 molar parts) of NMP was added, and the temperature was increased to 185°C. The amount of water inside the autoclave was 0.025 moles per mole of NMP added in step 2. When the gauge pressure reached 0.00 MPa, the valve with the fractionating column connected to it was released, and the temperature was increased to an internal

temperature of 200°C over 1 hour. During this, the temperature at the outlet of the fractionating column was controlled by cooling and valve adjustment to remain 110°C or below. The steam mixture of p-DCB and water that distilled off was condensed through the condenser and separated using the decanter, and p-DCB was returned to the autoclave. The amount of water that distilled off was 0.228 parts by mass (12.7 molar parts).

[Step 3]

The amount of water inside the autoclave at the start of step 3 was 0.041 parts by mass (2.3 molar parts), and this corresponded to 0.005 moles per mole of NMP added in step 2 and 0.010 moles per mole of sulfur atoms present in the autoclave. The amount of SMAB inside the autoclave was the same as in step 1, 0.147 moles per mole of sulfur atoms present in the autoclave. Then the temperature was increased from an internal temperature of 200°C to 230°C over 3 hours, and the contents were stirred for 1 hour at 230°C. Then the temperature was increased to 250°C, and the contents were stirred for 1 hour. The gauge pressure at an internal temperature of 200°C was 0.03 MPa, and the final gauge pressure was 0.40 MPa. After cooling, 0.650 parts by mass of the resulting slurry was poured into 3 parts by mass (3 parts by liter) of water, and the resulting mixture was stirred at 80°C for 1 hour and then filtered. This cake was washed by stirring in 3 parts by mass (3 parts by liter) of warm water for 1 hour again, and then the mixture was filtered. This operation was repeated four times. This cake was combined with 3 parts by mass (3 parts by liter) of water again, and the pH was adjusted to 4.0 by adding acetic acid. After washing by 1 hour of stirring, the mixture was filtered. This cake was washed by stirring in 3 parts by mass (3 parts by liter) of warm water for 1 hour again, and then the mixture was filtered. This operation was repeated twice. The residue was dried at 120°C overnight using a hot-air oven, giving PPS resin (A3), a PPS resin in white powder form. The melt viscosity of this polymer at 300°C was 15 Pa s. The non-Newtonian exponent of the polymer was 1.06.

(Production Example 4) Production of PPS Resin (a-4)

A 150-liter autoclave to which a pressure gauge, a thermometer, and a condenser had been attached and having stirring blades and a bottom valve was charged with 19.413 parts by mass of sodium sulfide in flake form (60.3% by mass $Na_2S$) and 45.000 parts by mass of NMP. Under a stream of nitrogen, the temperature was increased to 209°C with stirring to make 4.644 parts by mass of water distill off (the amount of water remaining was 1.13 moles per mole of sodium sulfide). Then the autoclave was closed tightly and cooled to 180°C, and 22.05 parts by mass of para-dichlorobenzene and 18.000 parts by mass of NMP were added. At a solution temperature of 150°C, the pressure was increased using nitrogen gas to 0.1 MPa as a gauge pressure, and heating was started. The solution was allowed to react for 3 hours at a solution temperature of 260°C while being stirred, and the top of the autoclave was cooled by sprinkling water. Then the temperature was lowered, and the cooling of the top of the autoclave was stopped at the same time. During the cooling of the top of the autoclave, the solution temperature was held constant so that it would not decrease. The maximum pressure during the reaction was 0.85 MPa.

After the reaction, the solution was cooled. After the cooling, 0.650 parts by mass of the resulting slurry was poured into 3 parts by mass (3 parts by liter) of water, and the resulting mixture was stirred at 80°C for 1 hour and then filtered. This cake was washed by stirring in 3 parts by mass (3 parts by liter) of warm water for 1 hour again, and then the mixture was filtered. This operation was repeated seven times. The residue was dried at 120°C overnight using a hot-air oven, giving PPS resin (a-4), a PPS resin in white powder form. The melt viscosity of the resulting polymer was 6 Pa·s, and the non-Newtonian exponent of the polymer was 1.10.

- Antiviral Agents

  B-1: Ishizuka Glass Co., Ltd.'s "IONPURE P"; maximum particle diameter, 40 μm; silver ion-containing phosphate-borate glass
  B-2: Nippon Sheet Glass Co., Ltd.'s "AMORCLEAN P-05"; average particle diameter, 5 μm; silver ion-containing borate glass

- Calcium Carbonate
  C-1: Maruo Calcium Co., Ltd.'s "Calcium Carbonate"
- Thermoplastic Elastomer
  D-1: Sumitomo Chemical Co., Ltd.'s "IGETABOND 7L"
- Glass Fiber
  E-1: Nippon Electric Glass Co., Ltd.'s "T-717H"; average fiber length, 3 mm; average fiber diameter, 10 μm

## Claims

1. A method for producing a polyarylene sulfide resin composition, the method including a step of blending a polyarylene sulfide resin (A) and an antiviral agent (B) as essential components and
melt-kneading the resin (A) and the antiviral agent (B) in a temperature range of equal to or higher than a melting point of the polyarylene sulfide resin (A), wherein:
the antiviral agent (B) is metal ion-containing phosphate and/or borate glass.

2. The method according to Claim 1 for producing a polyarylene sulfide resin composition, the method including a step of dry-mixing the polyarylene sulfide resin (A) and the antiviral agent (B).

3. The method according to Claim 1 for producing a polyarylene sulfide resin composition, wherein the antiviral agent (B) is silver ion-containing phosphate and/or borate glass.

4. The method according to any of Claims 1 to 3 for producing a polyarylene sulfide resin composition, wherein an amount of the antiviral agent (B) is in a range of 2 to 44 parts by mass per 100 parts by mass of the polyarylene sulfide resin (A).

5. A method for producing a molded article, the method including a step of producing a polyarylene sulfide resin composition by the production method according to any one of Claims 1 to 4 and a step of melt-molding the resulting polyarylene sulfide resin composition.

6. A polyarylene sulfide resin composition including a polyarylene sulfide resin (A) and an antiviral agent (B) as essential components, wherein:
the antiviral agent (B) is metal ion-containing phosphate and/or borate glass.

7. The polyarylene sulfide resin composition according to Claim 6, wherein the antiviral agent (B) is silver ion-containing phosphate and/or borate glass.

8. The polyarylene sulfide resin composition according to Claim 6 or 7, wherein an amount of the antiviral agent (B) is in a range of 2 to 44 parts by mass per 100 parts by mass of the polyarylene sulfide resin (A).

9. The polyarylene sulfide resin composition according to any one of Claims 6 to 8, wherein the resin composition is a molten blend.

10. An article molded from the polyarylene sulfide resin composition according to any one of Claims 6 to 9.

11. Use of the molded article according to Claim 10 as an antiviral element.

**INTERNATIONAL SEARCH REPORT**

International application No. **PCT/JP2021/029054**

**A. CLASSIFICATION OF SUBJECT MATTER**

***C08L 81/02***(2006.01)i; ***C08K 3/105***(2018.01)i; ***C08K 3/32***(2006.01)i; ***C08K 3/38***(2006.01)i; ***C08K 3/40***(2006.01)i
FI: C08L81/02; C08K3/40; C08K3/32; C08K3/38; C08K3/105

According to International Patent Classification (IPC) or to both national classification and IPC

**B. FIELDS SEARCHED**

Minimum documentation searched (classification system followed by classification symbols)

C08L81/02; C08K3/105; C08K3/32; C08K3/38; C08K3/40

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 10-324804 A (TONEN CHEMICAL CORP.) 08 December 1998 (1998-12-08) claims, paragraph [0026], examples 1-5 | 1-11 |
| Y | claims, paragraph [0026], examples 1-5 | 1-11 |
| Y | JP 2005-255517 A (SCHOTT AG.) 22 September 2005 (2005-09-22) claims, paragraphs [0091], [0097] | 1-11 |
| Y | JP 2009-167359 A (TECHNO POLYMER CO., LTD.) 30 July 2009 (2009-07-30) claims, paragraph [0012] | 1-11 |
| Y | JP 11-172105 A (TONEN CHEMICAL CORP.) 29 June 1999 (1999-06-29) claims, paragraph [0033] | 1-11 |
| A | JP 10-245305 A (TOYOBO CO., LTD.) 14 September 1998 (1998-09-14) | 1-11 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **16 September 2021** | **28 September 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2021/029054**

| Patent document cited in search report | Publication date (day/month/year) | Patent family member(s) | Publication date (day/month/year) |
|---|---|---|---|
| JP 10-324804 A | 08 December 1998 | (Family: none) | |
| JP 2005-255517 A | 22 September 2005 | US 2005/0233888 A1<br>claims, paragraphs [0163], [0169]-[0197]<br>EP 1580172 A3 | |
| JP 2009-167359 A | 30 July 2009 | (Family: none) | |
| JP 11-172105 A | 29 June 1999 | (Family: none) | |
| JP 10-245305 A | 14 September 1998 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 3043457 A
- JP 11172105 A
- JP 10324804 A
- JP 7228699 A
- WO 2010058713 A